# EUROPEAN PATENT APPLICATION

(11) **EP 4 729 571 A1**
(43) Date of publication of application: **22.04.2026**
(21) Application number: 24207576.0
(22) Date of filing: 18.10.2024
(51) Int. Cl.: C08J 11/08

(54) **ENERGY EFFICIENT DISSOLUTION OF POLYOLEFINS FROM PLASTIC WASTE**

(71) Applicant: Nederlandse Organisatie voor toegepast- natuurwetenschappelijk onderzoek TNO, 2595 DA 's-Gravenhage (NL)
(72) Inventor: VAN DE MOOSDIJK, Johannes Henricus Wilhelmus, 2595 DA 's-Gravenhage (NL); ROELANDS, Cornelis Petrus Marcus, 2595 DA 's-Gravenhage (NL); VAN GOLEN-KWAKERNAAT, Lauran, 2595 DA 's-Gravenhage (NL); VAN KOL, Danny, 2595 DA 's-Gravenhage (NL); MEIJNSTER, Luuk Hu-Yuan Li, 2595 DA 's-Gravenhage (NL)
(74) Representative: V.O.

(57) **Abstract**

The present invention is directed to dissolving polyolefins for treatment in pyrolysis. The invention accordingly, provides a method for dissolving polyolefins from plastic waste in a solvent at below the dissolution temperature of the polyolefins in the solvent, wherein said method comprises the steps of: i) mixing the plastic waste and a first solvent to dissolve the polyolefins in the first solvent and obtain a first polyolefin solution; ii) adding a second solvent to the first polyolefin solution to obtain an intermediate solution of polyolefins in a solvent mixture comprising the first and second solvent, wherein the second solvent has a higher boiling point than the first solvent; and iii) evaporating the first solvent from the intermediate solution at a temperature of below the boiling temperature of the second solvent to obtain a second polyolefin solution.

## Description

The invention is in the field of plastic waste recycling. In particular, the invention is directed to a method for dissolving polyolefins from plastic waste.

Plastics typically mainly comprise polymers derived from fossil fuel-based petrochemicals. It is generally acknowledged that it is not ideal to use fossil fuel-based materials and therefore alternatives are sought after. Possible alternatives include synthesizing plastics from renewable materials and/or recycling the plastics. In typical conventional recycling processes, waste is collected and sorted. Sorting typically comprises mechanical sorting first by type of material (e.g. plastics, paper), after which the separate plastics stream is sorted by type of polymer, for instance using infrared spectroscopy. This results in several mono streams of for instance low-density polyethylene (LDPE), high-density polyethylene (HDPE), polypropylene (PP) and polyethylene terephthalate (PET), and a residual waste stream.

The residual waste stream comprises a diversity of polymer types (*i.a.* mixed polyolefins, abbreviated as MPO) that are not easily mechanically separated, as well as other residue materials. The residual waste steam is sometimes also referred to as a crude MPO. The MPO includes for example polystyrenes, polypropylenes and polyethylenes. The residual waste steam comprises mostly MPO, which MPO is desirably subjected to pyrolysis and/or cracking to extract its heat and/or functional building blocks. However, the crude MPO is generally insufficiently clean for it to be subjected to pyrolysis and/or cracking. Accordingly, conventionally, the residual waste stream is generally first pre-treated, which includes dry washing, size reduction density separation and the like, to separate non-plastic residues such as sand, food scraps, paper and dense plastics such as PET, polyvinylchloride (PVC), polycarbonates (PC) and polyamides from the MPO, resulting in a clean residual waste stream, also referred to as clean MPO.

The clean MPO can be subjected to pyrolysis and/or cracking. Ideally, the clean MPO is therefore liquified, as this provides a better heat transfer in the pyrolysis step.

There are several disclosures describing methods for liquifying plastics. Examples are known wherein the dissolved polymers are precipitated to obtain recycled polymer, such as in WO2022255872A1. WO2022255872A1 describes a method for separating a first and a second polyolefin from plastic waste, wherein the polyolefin is dissolved and precipitated using a cooling surface. The solvent used is preferably MTBE or cyclopentane.

Other examples are known wherein the polymer solution is directly used, for example by using it as a liquid feedstock for a pyrolysis step, such as in EP4074770A1 or WO2024030748A1. A liquid feedstock is known to give certain benefits in the pyrolysis process. EP4074770A1 describes a process for extracting polymers, preferably polyolefins, from polymer-containing waste material using a non-polar hydrocarbon solvent. The extracted polyolefin material may be processed in a further recycling process such as pyrolysis.

WO2024030748A1 describes a recycling process comprising the steps of (a) liquifying waste plastic to form a liquified waste plastic stream; and (b) introducing at least a portion of the liquified waste plastic stream into a fluidized catalytic cracker (FCC) unit and/or a hydrocracking unit. A portion of the liquified waste plastic may be pyrolyzed before cracking. An example of step (a) is dissolving the waste plastic in a solvent selected from the group of alcohols, glycols, cyclohexanedimethanol, glycerin, pyrolysis oil, motor oil, vacuum gas oil, atmospheric gas oil, light cycle oil, decahydronaphthalene (Decalin), heavy aromatics and heavy aromatics mixtures, water, and mixtures thereof.

Selecting an appropriate solvent for preparing a liquid feedstock for pyrolysis is challenging. Ideally, the solvent must have the following combination of properties.

First of all, the solvents should be capable of effectively dissolving polyolefins and optionally other plastics, preferably at a relatively low temperature (for energy efficiency). Second, the solvent should be compatible with purification techniques such as filtration. It is desirable to be able to remove impurities from the polymer solution before the pyrolysis step. Third, the solvent itself should also result in a valuable product when being subjected to pyrolysis, or at least be of low value if the pyrolyzed product will not be valuable.

EP4074770A1 and WO2024030748A1 show examples of solvents, but they are all lacking in or more of the above properties. The conventional methods typically require high temperatures for liquifying the plastics or they do not use low-value solvents or solvents compatible with purification techniques.

It is an object of the present invention to provide an improved method for dissolving polyolefins from plastic waste that overcomes at least part of the above-mentioned drawbacks.

Accordingly, the present invention is directed to a method for dissolving polyolefins from plastic waste in a low-value solvent at below the dissolution temperature of the polyolefins in the low-value solvent. The present inventors found that this can be achieved by using a first solvent (which is more costly) in which the polyolefins can be dissolved at a lower temperature than possible in the low-value solvent, and subsequently carrying out a solvent switch to replace the costly first solvent with a low-cost second solvent. The present inventors surprisingly found that this solvent switch can be carried out at below the dissolution temperature of the polyolefins in the low-value solvent.

Without wishing to be bound by theory, the present inventors believe that a difference between the dissolution temperature of the polyolefins in a certain solvent and the minimum temperature at which that solution can be kept without precipitation of the dissolved polyolefins, referred to as the precipitation temperature, is due to the energy (*i.e.* enthalpy) necessary to untangle the polyolefins during dissolution. Once the polyolefins are untangled and dissolved, a lower temperature than the dissolution temperature is sufficient to keep the untangled polyolefins in solution.

Accordingly, the method of the present invention comprises the steps of:
i) mixing the plastic waste and a first solvent to dissolve the polyolefins in the first solvent and obtain a first polyolefin solution;
ii) adding a second solvent to the first polyolefin solution to obtain an intermediate solution of polyolefins in a solvent mixture comprising the first and second solvent, wherein the second solvent has a higher boiling point than the first solvent;
iii) evaporating the first solvent from the intermediate solution at a temperature of below the boiling temperature of the second solvent to obtain a second polyolefin solution.

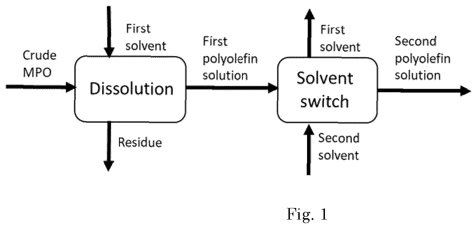

Figure 1 schematically illustrates a particular embodiment of the present invention.

The second polyolefin solution obtained in step iii) may be subjected to a pyrolysis process. In a pyrolysis process, the polyolefins are thermally decomposed in the absence of oxygen. Such a pyrolysis process may be followed by other processing steps, such as hydrotreatment, cracking and other downstream processes (DSP).

Dissolving the polyolefins before processing facilitates transport and is beneficial for heat transfer in the pyrolysis process. In addition, dissolving the polyolefins aids in the purification of the polyolefins from plastic waste as the polyolefins can be separated from non-olefinic polymers by selective dissolution of the polyolefins. The non-soluble non-polyolefinic polymers and other non-soluble materials can then be easily separated from the polyolefin solution by solid-liquid separation techniques.

By first dissolving the polyolefins in the first solvent, the polyolefins can be dissolved at a lower temperature compared to if the polyolefins would be directly dissolved in the second solvent, due to both the better solubility of the polyolefins in the first solvent and the fact that the solvent switch can be performed below the dissolution temperature of the polyolefins in the second solvent. This is favorable from an economic and sustainability perspective.

Accordingly, the second polyolefin solution may be obtained while keeping the temperature in step i) to step iii) below the theoretical dissolution temperature of the polyolefins in the second solvent, and while keeping the temperature in step iii) above the precipitation temperature of the polyolefins in the second solvent.

In particular, the dissolution of the polyolefins in the first solvent in step i) may be performed at a temperature of below 130 °C, preferably below 120 °C, more preferably below 110 °C, even more preferably below 100 °C.

The polyolefins are comprised in plastic waste. This plastic waste is typically low-value plastic waste, which may contain non-polyolefinic polymers (such as polyethylene terephthalate (PET), polyvinyl chloride (PVC), polycarbonate (PC) and/or polyamides) and non-polymeric materials (such as paper, cardboard, labels, cork, wood or pigments). Hence, the plastic waste may comprise MPO, more specifically crude MPO and/or clean MPO. The MPO preferably comprises polyethylene, polypropylene and/or polystyrene.

It is particularly preferred that the plastic waste comprises or essentially consists of plastic waste according to the DKR-310 and/or DKR-350 standard. The DKR standard is established by the German "Deutsche Gesellschaft für Kreislaufwirtschaft und Rohstoffe mbH (DKR)"

The plastic waste may comprise a material fraction (herein referred to as a non-soluble fraction) that this not soluble in the first solvent in steps i and ii. Examples of materials in the non-soluble fraction include sand, food scraps, paper and dense plastics such as polyethylene terephthalate (PET), polyvinylchloride (PVC), polycarbonates (PC) and polyamides. The method of the present invention may accordingly further comprise separating this non-soluble fraction from the first polyolefin solution, preferably before step ii). The temperature during separating this non-soluble fraction should preferably be kept above the precipitation temperature of the polyolefins in the first polyolefin solution.

The non-soluble fraction may be separated by any means known in the art, such as decantation, centrifugation or filtration, preferably filtration. The filtration may comprise one or more filtration steps, such as a filtration step using a coarse filter, which typically has a pore size in the range of 50-100 µm, to remove the non-soluble fraction with larger particle size. In addition, the filtration may comprise a filtration step using a fine filter, which typically has a pore size of below 1 µm, to remove the non-soluble fraction with smaller particle size, such as pigments or fillers such as silica or carbon black

Advantageously, the separation of the non-soluble fraction in accordance with the present invention, can partially or fully replace - treatment steps that are conventionally carried out on crude MPO streams.

The first solvent is preferably able to dissolve the polyolefins at a lower temperature than the second solvent. The first solvent preferably comprises an alkane, an aromatic hydrocarbon and/or an ether, more preferably an alkane and/or ether. With respect to alkanes, linear or cyclic alkanes comprising 4 to 8 carbon atoms, such as cyclopentane, hexane or butane are preferred, as these alkanes have low boiling points and can be easily evaporated in step iii). Cyclopentane is most preferred. With respect to aromatic hydrocarbons, xylene and toluene are preferred, due to their relatively low boiling points compared to other aromatic hydrocarbons.

Due to their apolar nature, alkanes, aromatic hydrocarbons or ether solvents are able to selectively dissolve polyolefins, while non-polyolefinic polymers (such as PET, PVC, PC and polyamides) remain primarily undissolved and can be separated. This is favorable, because the presence of heteroatoms in the second polyolefin solution is undesirable for further processing of the second polyolefin solution. In particular, the presence of heteroatoms in the pyrolysis process or in the hydrotreater and cracker is highly undesirable. For instance, the presence of halogenated compounds will result in the formation of the corresponding corrosive hydrogen halides.

In addition, apolar alkanes, aromatic hydrocarbons and ether solvents have a low viscosity, which is favorable for removing non-soluble from the first polyolefin solution by filtration, as a solvent with a low viscosity allows for easier filtration. Generally, the viscosity of a solvent is correlated to the boiling point of the solvent, so first solvents with low boiling points are particularly preferred.

The first solvent preferably also has a low boiling point in order for it to be easily evaporated in step iii), such as a boiling point of below 130 °C, preferably below 110 °C, more preferably below 90 °C, even more preferably below 70 °C, most preferably below 55 °C.

The evaporation of the first solvent in step iii) may remove most of the first solvent, preferably more than 75%, more preferably more than 85%, even more preferably more than 90%.

It is preferred that at least part of, preferably all of the first solvent evaporated in step iii) is recycled into step i). Removal and recycling of the first solvent is preferred from an economic viewpoint. By removal and recycling of the first solvent, it is economically viable to use a high-value solvent that is able to selectively dissolve polyolefins at a relatively low temperature compared to the temperature that would be required to dissolve the polyolefins in the second solvent that has a higher boiling point. In addition, the fact that the first solvent has a lower boiling point than the second solvent allows for easier removal of the non-soluble fraction, in particular by filtration, due to the low viscosity of the first solvent.

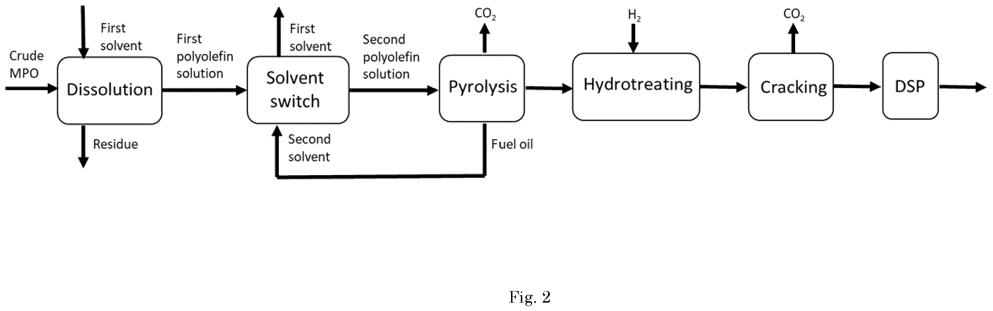

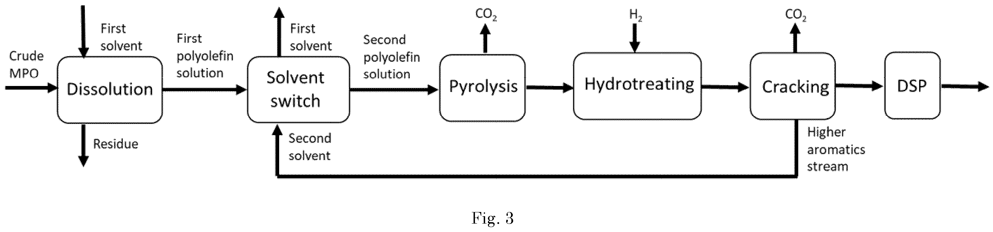

The second solvent preferably comprises a solvent of lower value than the first solvent, in particular a solvent comprising a mixture of aliphatic and optionally aromatic hydrocarbons. The mixture may for example have a boiling range of between 150 - 225 °C. Especially suitable solvents may comprise solvents that benefit from undergoing the same further treatment, for example a pyrolysis process, as the second polyolefin solution, such as a fuel oil product fraction from a pyrolysis process or a higher aromatics stream from a cracker. This is schematically illustrated in Figures 2 and 3, respectively. In a pyrolysis process, these solvents can be converted to lower molecular weight compounds, while serving as a solvent for the polyolefins.

The fuel oil product fraction from a pyrolysis process is a heavier fraction of pyrolysis oil, preferably mostly comprising compounds comprising between 6 and 30 carbon atoms, more preferably mostly comprising compounds comprising between 6 and 12 carbon atoms. The higher aromatics stream from a cracker is a stream of aromatic hydrocarbons with higher molecular weights, preferably mostly comprising compounds comprising between 6 and 30 carbon atoms, more preferably mostly comprising compounds comprising between 6 and 12 carbon atoms.

The method of the present invention may be performed above at a pressure of above 1 bar. This has the advantage that lower temperatures are needed.

The evaporation of the first solvent in step iii) may comprise reducing the pressure compared to the pressure in step ii).

For the purpose of clarity and a concise description features are described herein as part of the same or separate embodiments, however, it will be appreciated that the scope of the invention may include embodiments having combinations of all or some of the features described.

The invention can be illustrated with the following, non-limiting examples.

### Example 1

A dissolution vessel equipped with a stirrer, and containing a mixture of MPO (50 grams), cyclopentane (1 liter), and activated coal (5 gram) was heated to an internal temperature of 100 °C. Once the polymer was dissolved, the reaction mixture was transferred to a heated filter and pushed through by differential pressure. The filtrate was collected in a vessel containing pre-heated white spirit (1 liter). During transfer of the filtrate to the collection vessel, cyclopentane was simultaneously distilled off and collected in a distillate vessel. The dissolution vessel and filter were rinsed twice with hot cyclopentane (2 x 1 liter), and collected and distilled in the collection vessel in the same fashion. The yield of recovered cyclopentane was 2,5 liter (83 %).

To establish the yield of polymer in the polymer solution, the polymer was precipitated by adding isopropanol. The precipitated polymer was then filtered off, washed with acetone, and dried in a vacuum oven. The yield was 39.2 grams (78 %)

### Example 2

A dissolution vessel equipped with a stirrer, and containing a mixture of MPO (3 grams), cyclopentane (50 milliliter), and activated coal (0.5 gram) was heated to an internal temperature of 100 °C. Once the polymer was dissolved, the reaction mixture was transferred to a heated filter and pushed through by differential pressure. The filtrate was collected in a vessel containing pre-heated white spirit (50 milliliter). After transfer of the filtrate to the collection vessel, cyclopentane was distilled off and collected in a distillate vessel.

To establish the yield of polymer in the polymer solution, the polymer was precipitated by adding the polymer solution into a vessel with a large excess of ethanol. The precipitated polymer was then filtered off, washed with acetone, and dried in a vacuum oven. The yield was 1.5 grams (50 %). This is a common yield for this small-scale reactor due to the normally significant losses in the system. No polymer material was left in the dissolution vessel.

### Comparative Example 1

A dissolution vessel equipped with a stirrer, and containing a mixture of MPO (6 grams), white spirit (100 milliliter), and activated coal (1 gram) was heated to an internal temperature of 100 °C. Once the polymer was dissolved, the reaction mixture was transferred to a heated filter and pushed through by differential pressure. The filtrate was collected in a pre-heated vessel.

To establish the yield of polymer in the polymer solution, the polymer was precipitated by adding the polymer solution into a vessel with a large excess of ethanol. The precipitated polymer was then filtered off, washed with acetone, and dried in a vacuum oven. The yield was 2.1 grams (35 %). A significant amount of polymer material (2.2 grams) was found to be left in the dissolution vessel.

## Claims

1. A method for dissolving polyolefins from plastic waste in a solvent at below the dissolution temperature of the polyolefins in the solvent, wherein said method comprises the steps of:
i) mixing the plastic waste and a first solvent to dissolve the polyolefins in the first solvent and obtain a first polyolefin solution;
ii) adding a second solvent to the first polyolefin solution to obtain an intermediate solution of polyolefins in a solvent mixture comprising the first and second solvent, wherein the second solvent has a higher boiling point than the first solvent;
iii) evaporating the first solvent from the intermediate solution at a temperature of below the boiling temperature of the second solvent to obtain a second polyolefin solution.

2. The method according to claim 1, wherein the plastic waste comprises low-value plastic waste comprising non-polyolefinic polymers and/or non-polymeric materials, preferably wherein the plastic waste comprises or essentially consists of plastic waste according to DKR-350 standard and/or DKR-310.

3. The method according to any of the previous claims, wherein the polyolefins comprise mixed polyolefins (MPO), preferably comprising polyethylene, polypropylene and/or polystyrene.

4. The method according to any of the previous claims, wherein the first solvent comprises an alkane, an aromatic hydrocarbon and/or an ether, preferably an alkane and/or aromatic hydrocarbon.

5. The method according to claim 4, wherein the alkane is a C₄-C₈ alkane, preferably cyclopentane.

6. The method according to any of claims 4-5, wherein the aromatic hydrocarbon is xylene or toluene.

7. The method according to any of the previous claims, wherein the first solvent has a boiling point of below 130 °C, preferably below 110 °C, more preferably below 90 °C, even more preferably below 70 °C, most preferably below 55 °C.

8. The method according to any of the previous claims, wherein the second solvent comprises a solvent of lower value than the first solvent, preferably a solvent comprising a mixture of aliphatic and optionally aromatic hydrocarbons, more preferably a fuel oil product fraction from a pyrolysis process or a higher aromatics stream from a cracker.

9. The method according to any of the previous claims, wherein the evaporation of the first solvent in step iii) removes most of the first solvent, preferably more than 75%, more preferably more than 85%, even more preferably more than 90%.

10. The method according to any of the previous claims, wherein at least part of, preferably all of the first solvent evaporated in step iii) is recycled into step i).

11. The method according to the any of the previous claims, wherein step i) is performed at a temperature of below 130 °C, preferably below 120 °C, more preferably below 110 °C, even more preferably below 100 °C.

12. The method according to any of the previous claims, wherein the second polyolefin solution is obtained while keeping the temperature in step i) to step iii) below the theoretical temperature required for obtaining the second polyolefin solution by dissolving the polyolefins in the second solvent, and while keeping the temperature in step iii) above the precipitation temperature of the polyolefins in the second solvent.

13. The method according to any of the previous claims, wherein steps i-iii are performed above 1 bar.

14. The method according to any of the previous claims, where the evaporation of the first solvent in step iii) comprises reducing the pressure compared to the pressure in step ii).

15. The method according to any of the previous claims, wherein said plastic waste comprises a fraction that is not soluble, referred to as a non-soluble fraction, in the first solvent and wherein said method further comprises removing said non-soluble fraction from the first polyolefin solution, preferably before step ii).

16. The method according to claim 15, wherein removing the non-soluble fraction is performed by decantation, centrifugation and/or filtration, more preferably by filtration.

17. A method wherein the second polyolefin solution obtained by step iii) of any of the previous claims is subjected to a pyrolysis process.
